# EUROPEAN PATENT SPECIFICATION

(11) **EP 1 847 426 B1**
(45) Date of publication and mention of the grant of the patent: **23.06.2010**
(21) Application number: 06112907.8
(22) Date of filing: 21.04.2006
(51) Int. Cl.: B60S 1/40, B60S 1/38

(54) **Windscreen wiper device**
Scheibenwischervorrichtung
Dispositif d'essuie-glace

(43) Date of publication of application: 24.10.2007
(73) Proprietor: Federal-Mogul S.A., 6790 Aubange (BE)
(72) Inventor: Boland, Xavier, 6700, Arlon (BE)
(74) Representative: Hooiveld, Arjen Jan Winfried

(56) References cited:
- DE-A1- 10 000 374
- DE-A1- 10 038 992
- DE-A1- 10 259 477
- DE-A1- 10 259 480
- US-B1- 6 553 607

## Description

The invention relates to a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for connecting said wiper blade to an oscillating arm, wherein said connecting device is pivotally connected to said oscillating arm near its free end about a pivot axis of a transverse pivot pin provided on said oscillating arm.

Such a windscreen wiper device is known from international patent publication no. WO 00/73113 (Robert Bosch GmbH). The prior art windscreen wiper device is in particular designed as a "yokeless" wiper device, wherein use is no longer made of several yokes pivotally connected to each other, but wherein the wiper blade is biassed by the carrier element, as a result of which it exhibits a specific curvature. The oscillating arm of the prior art windscreen wiper device comprises a transverse pivot pin on one side thereof, which is inserted sideways into a blind hole of the connecting device. In order to secure said connecting device on the pivot pin said oscillating arm is provided with an extension comprising said pivot pin and a L-shaped shoulder which projects out in the direction of said pivot pin and across said wiper blade and at the free end of which is disposed a leg facing the windscreen.

A disadvantage of a windscreen wiper device known from the above international patent publication is that said connecting device can only be used for one type of oscillating arm, namely in case said transverse pivot pin extends sidewardly from said free end of said oscillating arm in a direction away from a bonnet or hood of a car.

DE-A-10259477 shows the preamble of claim 1.

It is the object of the invention to obviate these disadvantages of the prior art and in order to accomplish that objective a windscreen wiper device of the kind mentioned in the preamble is characterized by the features of claim 1. In other words, said transverse pivot pin can be inserted sideways in one hole or the other hole of the connecting device, dependent on the direction in which said transverse pivot pin extends sidewardly from said free end of said oscillating arm, that is *facing away from or facing towards* said bonnet or hood. Thus said connecting device can be used for every type of oscillating arm. Preferably, said connecting device is provided with a transverse through hole forming said holes on its longitudinal sides.

Known vehicles are often equipped with a so-called "butterfly" wiper arrangement on the front side thereof. In such arrangement two oscillating arms are each pivotally connected to a mounting head fixed for rotation to a shaft driven by a small motor, wherein in use the one shaft rotates alternately in a counterclockwise and in a clockwise sense (this shaft corresponds to the oscillating arm at the drivers side of the vehicle), whereas the other shaft simultaneously rotates alternately in a clockwise and in a counterclockwise sense (this shaft corresponds to the oscillating arm at the passengers side of the vehicle). In use both shafts carry the mounting heads into rotation also, which in turn draw the oscillating arms into rotation and by means of the connecting devices move the wiper blades accordingly. In practice it has become apparent that, during replacement of windscreen wiper devices known from the above international patent publication no. WO 00/73113 (Robert Bosch GmbH) and used in a vehicle with the above-described "butterfly" wiper arrangement, one must carefully look which windscreen wiper device is meant to be mounted on the oscillating arm at the drivers side of the vehicle and which windscreen wiper device is meant to be mounted on the oscillating arm at the passenger side of the vehicle.

In accordance with the invention said connecting device is mirror symmetrical relative to its middle longitudinal plane perpendicular to said windscreen to be wiped. In other words, due to the symmetric form of said connecting device, it is made possible that a windscreen wiper device equipped with such a connecting device can be mounted on the oscillating arm at the passenger side of the automobile, as well as on the oscillating arm at the drivers side of the automobile. Such a symmetric connecting device allowing said transverse pivot pin to slide sidewards into one hole or the other hole of said connecting device, is a true universal connecting device suitable to be used for each type of oscillating arm (arrangement). As said connecting device is not mirror symmetrical in a plane perpendicular to said middle longitudinal plane, it can only be connected to an oscillating arm in a way that any spoiler provided on the wiper blade is correctly orientated.

In a preferred embodiment of a windscreen wiper device according to the invention said connecting device comprises a first part connected to said longitudinal strips, as well as a second part connected to said first part and provided with said holes on its opposite longitudinal sides. In other words, said second part actually serves as the connector for said oscillating arm, wherein said second is preferably detachably connected to said first part, as if it were a detachable cap on said first part.

In accordance with the invention said pivot pin extends sidewardly from said free end of said oscillating arm. Said windscreen wiper device comprises securing means for securing said connecting device on the pivot pin. Said oscillating arm is provided with an extension comprising said pivot pin and a L-shaped shoulder acting as said securing means, wherein said L-shaped shoulder projects out in the direction of said pivot pin and across said wiper blade and at the free end of which is disposed a leg facing said windscreen to be wiped.

The invention will now be explained in more detail with reference to figures illustrated in a drawing, wherein:
Figures 1, 2 and 3 are a perspective, schematic view of a part of a preferred embodiment of a windscreen wiper device in accordance with the invention, without an oscillating arm (figure 1) and with an oscillating arm (figures 2 and 3); and
Figures 4 and 5 are a perspective, schematic view of a first part and a second part of a connecting device as used in figures 1, 2 and 3.

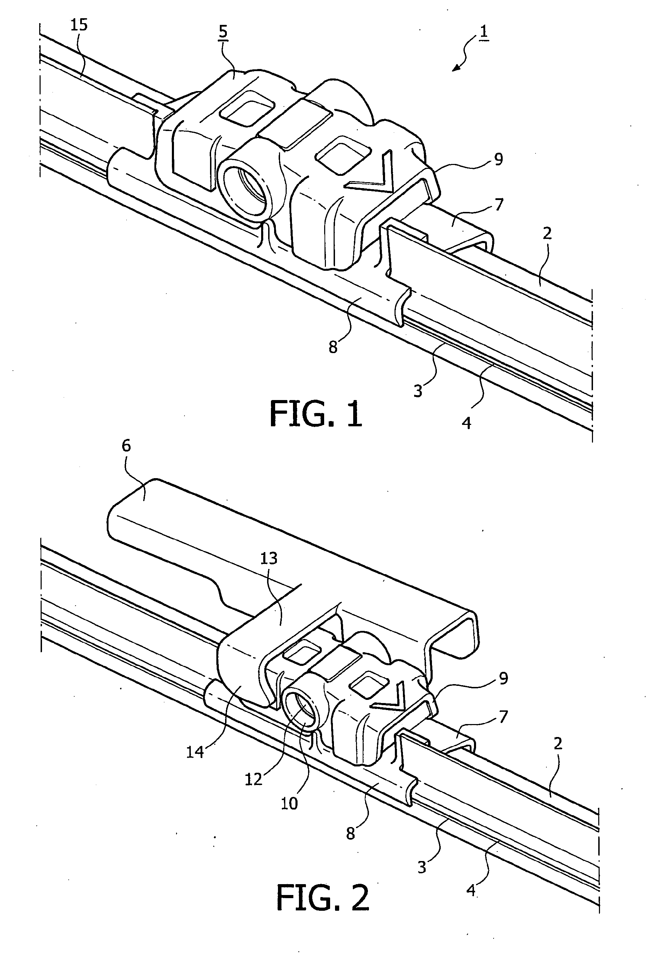

Figure 1 shows a preferred variant of a windscreen wiper device 1 according to the invention. Said windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the wiper blade 2, as it were, which is thus biassed in a curved position (the curvature in operative position being that of a windscreen to be wiped). Neighbouring ends of the strips 4 are interconnected on either side of the windscreen wiper device 1 by means of connecting pieces functioning as clamping members (not shown). These connecting pieces may be separate constructional elements, which may be form-locked ("a positive locking or having a positive fit") or force-locked to the ends of the strips 4. In another preferred embodiment, said connecting pieces are in one piece with the strips 4 made of spring band steel. In the latter case said connecting pieces form transverse bridges for the strips 4, as it were.

The windscreen wiper device 1 is furthermore built up of a connecting device 5 of plastic material for an oscillating arm 6. Alternatively, the connecting device 5 may also be made of metal, such as steel or aluminum. The connecting device 5 comprises a first part 7 having engaging members 8 that are integral therewith, which engage round longitudinal sides of the strips 4 that face away from each other and are attached to said strips 4 by welding, soldering or gluing, as a result of which said first part 7 is firmly attached to the unit consisting of the wiper blade 2 and the strips 4. A second part 9 of said connecting device 5 is preferably detachably connected, preferably through a snapping or clipping operation, to said first part 7 and forms the actual connector for the oscillating arm 6. The oscillating arm 6 is pivotally connected to the second part 9 (and preferably to both the second part 9 and the first part 7, in which case said first part 7 is also provided with co-axial holes) and thus to the connecting device 5 about a pivot axis near one end, as will be described hereunder.

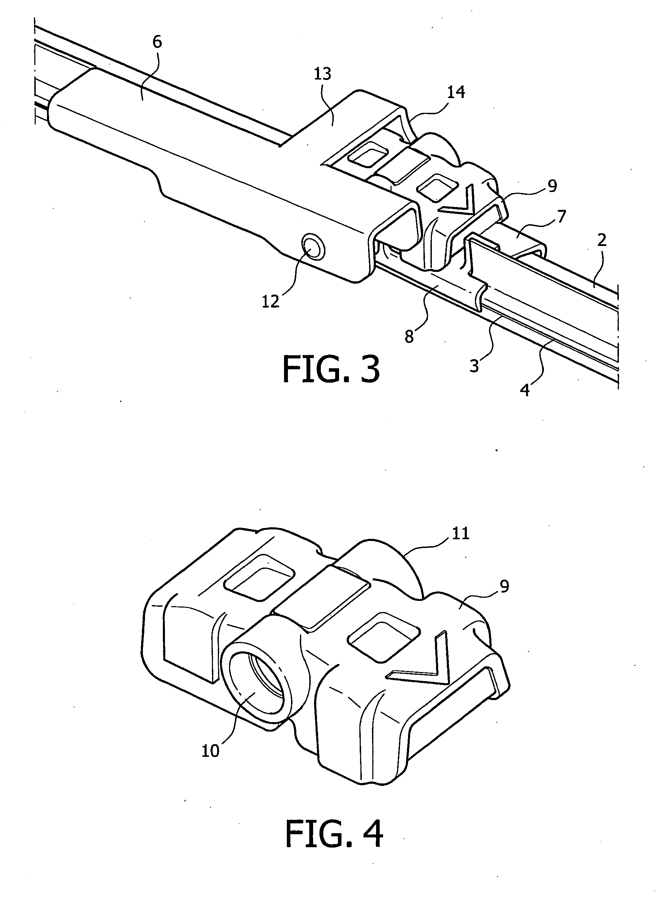

The second part 9 (being mirror symmetrical with respect to its middle longitudinal plane) of the connecting device 5 is provided with holes 10,11 on its opposite longitudinal sides for receiving a transverse pivot pin 12 extending sidewardly from the free end of the oscillating arm 6. Said transverse pivot pin 12 can be inserted sideways in one hole 10 or the other hole 11 of the second part 9, dependent on the direction in which said transverse pivot pin 12 extends sidewardly from said free end of said oscillating arm 6, i.e. facing away from (figure 2) or facing towards (figure 3) a bonnet of a car. Thus said connecting device can be used for every type of oscillating arm. As can be seen in figures 1, 2 and 3, the second part 9 is provided with a transverse through hole forming said holes 10,11 on its longitudinal sides.

Said oscillating arm 6 is provided with an extension comprising said pivot pin 12 and a L-shaped shoulder 13 projecting out in the direction of said pivot pin 12 and across said wiper blade 2 and at the free end of which is disposed a leg 14 facing the windscreen to be wiped. Said L-shaped shoulder 13 with said leg 14 acts as securing means for securing said connecting device 5 on the pivot pin 12. As will be apparent from figures 2 and 3, the oscillating arm must be turned in an upright position perpendicular to the windscreen to be wiped in order to allow mounting of a windscreen wiper device 1 according to the invention and must then be turned downwards parallel to the windscreen to be wiped in order to ensure a save securement of the connecting device 5 on the pivot pin 12.

Figure 4 shows a perspective, schematic view of the second part 9 of the connecting device 5 as used in figures 1, 2 and 3. Said second part 9 is mirror symmetrical relative to its middle longitudinal plane perpendicular to said windscreen to be wiped. Such a symmetric form allows said connecting device 5 to be used in a "butterfly" wiper arrangement, without having to bother about which windscreen wiper device is meant for the passenger side and which for the driver side, as explained earlier.

A spoiler 15 is furthermore provided (figures 1, 2 and 3).

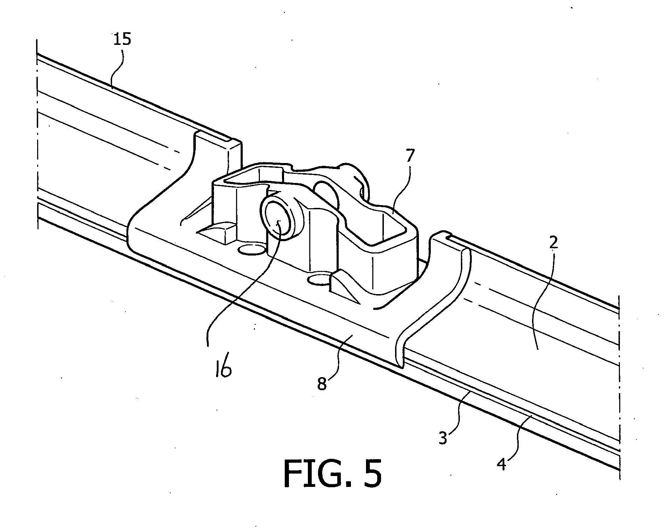

Figure 5 shows a perspective, schematic view of the first part 7 of the connecting device 5 as used in figures 1, 2 and 3. Said first part 7 is also provided with a transverse through hole 16 forming co-axial holes on its longitudinal sides, sothat said pivot pin 12 is inserted into co-axial holes of said first part 7 and said second part 9.

The invention is not restricted to the variants shown in the drawing, but it also extends to other embodiments that fall within the scope of the appended claims.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves (3) spaced-apart longitudinal strips (4) of the carrier element are disposed, wherein neighbouring ends of said longitudinal strips (4) are interconnected by a respective connecting piece, which windscreen wiper device (1) comprises a connecting device (5) for connecting said wiper blade (2) to an oscillating arm (6), wherein said connecting device (5) is pivotally connected to said oscillating arm (6) near its free end about a pivot axis of a transverse pivot pin (12) provided on said oscillating arm (6), wherein said connecting device (5) is provided with holes (10,11) on its opposite longitudinal sides for receiving said transverse pivot pin (12), wherein said connecting device (5) is mirror symmetrical relative to its middle longitudinal plane perpendicular to said windscreen to be wiped, **characterized in that** said connecting device (5) is not mirror symmetrical in a plane perpendicular to said middle longitudinal plane, in such a manner that said connecting device (5) is wider at one end than at its other end in order to allow that it can only be connected to an oscillating arm in a way that any spoiler (15) provided on said wiper blade (2) is correctly orientated, wherein said connecting device (5) is provided with a transverse through hole forming said holes (10, 11) on its longitudinal sides, wherein said oscillating arm (6) is provided with an extension comprising said pivot pin (12) and a L-shaped shoulder (13) acting as securing means for securing said connecting device (5) on the pivot pin (16), wherein said L-shaped shoulder (13) projects out in the direction of said pivot pin (12) and across said wiper blade (2) and at the free end of which is disposed a leg (14) facing said windscreen to be wiped, whereby the wiper arm (6) is only connectable with the securing means on the non-wide end of the connecting device (5).

2. A windscreen wiper device (1) according to claim 1, wherein said connecting device (5) comprises a first part (7) connected to said longitudinal strips (4), as well as a second part (9) connected to said first part (7) and provided with said holes (11, 12) on its opposite longitudinal sides.

3. A windscreen wiper device (1) according to claim 1 or 2, wherein said pivot pin (12) extends sidewardly from said free end of said oscillating arm (6).

## Patentansprüche

1. Scheibenwischervorrichtung (1), enthaltend ein elastisches, längliches Trägerelement wie auch ein längliches Wischerblatt (2) eines flexiblen Materials, das in Anlage mit einer zu wischenden Windschutzscheibe angeordnet werden kann, wobei das Wischerblatt (2) gegenüberliegende Längsrillen (3) auf seinen Längsseiten enthält und in diesen Rillen (3) beabstandete Längsstreifen (4) des Trägerelementes angeordnet sind, und benachbarte Enden der Längsstreifen (4) mit einem entsprechenden Verbindungsstück verbunden sind, wobei die Scheibenwischervorrichtung (1) eine Verbindungsvorrichtung (5) enthält, die das Wischerblatt (2) mit einem Schwingarm (6) verbindet und diese Verbindungsvorrichtung (5) schwenkbar mit dem Schwingarm (6) in der Nähe seines freien Endes um eine Schwenkachse eines querverlaufenden Schwenkzapfens (12) verbunden ist, der an dem Schwingarm (6) vorgesehen ist, wobei die Verbindungsvorrichtung (5) mit Löchern (10, 11) an ihren gegenüberliegenden Längsseiten versehen ist, die den querverlaufenden Schwenkzapfen (12) aufnehmen, und die Verbindungsvorrichtung (5) spiegelsymmetrisch relativ zu ihrer mittleren Längsebene, senkrecht zu der zu wischenden Windschutzscheibe ist, **dadurch gekennzeichnet, dass** die Verbindungsvorrichtung (5) in einer Ebene senkrecht zu der mittleren Längsebene derart nicht spiegelsymmetrisch ist, dass die Verbindungsvorrichtung (5) an dem einen Ende breiter ist als an ihrem anderen Ende, um es zu ermöglichen, dass sie mit einem Schwingarm nur derart verbunden werden kann, dass ein Luftabweiser (15), der an dem Wischerblatt (2) vorgesehen ist, korrekt ausgerichtet ist, wobei die Verbindungsvorrichtung (5) mit einem querverlaufenden Durchgangsloch versehen ist, das die Löcher (10, 11) an ihren Längsseiten ausbildet, der Schwingarm (6) mit einer Erweiterung versehen ist, die den Schwenkzapfen (12) und eine L-förmige Schulter (13) enthält, die als Sicherungseinrichtung zum Sichern der Verbindungsvorrichtung (5) an dem Schwenkzapfen (12) dient, und die L-förmige Schulter (13) in der Richtung des Schwenkzapfens (12) und über das Wischerblatt (2) hervorragt und an deren freiem Ende ein Schenkel (14) angeordnet ist, der der zu wischenden Windschutzscheibe zugewandt ist, wodurch der Wischerarm (6) lediglich mit der Sicherungseinrichtung an dem nicht breiten Ende der Verbindungsvorrichtung (5) verbunden werden kann.

2. Scheibenwischervorrichtung (1) nach Anspruch 1, bei der die Verbindungsvorrichtung (5) einen ersten Teil (7), der mit den Längsstreifen (4) verbunden ist, wie auch einen zweiten Teil (9) enthält, der mit dem ersten Teil (7) verbunden und mit den Löchern (11, 12) auf seinen gegenüberliegenden Längsseiten versehen ist.

3. Scheibenwischervorrichtung (1) nach Anspruch 1 oder 2, bei der sich der Schwenkzapfen (12) seitwärts von dem freien Ende des Schwingarms (6) erstreckt.

## Revendications

1. Dispositif (1) d'essuie-glace de pare-brise comprenant un élément support allongé et élastique, ainsi qu'un balai (2) d'essuie-glace allongé en matériau flexible, que l'on peut placer en butée avec un pare-brise à essuyer, ce balai d'essuie-glace (2) comprenant des rainures longitudinales opposées (3) sur ses côtés longitudinaux, rainures (3) dans lesquelles sont disposées des bandes longitudinales espacées (4) de l'élément support, dans lequel les extrémités voisines desdites bandes longitudinales (4) sont interconnectées par une pièce respective de raccordement, ce dispositif (1) à essuie-glace de pare-brise comprenant un dispositif (5) de raccordement permettant de relier ledit balai d'essuie-glace (2) à un bras oscillant (6), ledit dispositif (5) de raccordement étant relié à pivot audit bras oscillant (6) à proximité de son extrémité libre, autour d'un axe de pivotement d'une broche (12) de pivot transversale située sur ledit bras oscillant (6), dans lequel ledit dispositif (5) de raccordement est doté de trous (10, 11) sur ses côtés longitudinaux opposés, afin de recevoir ladite broche (12) de pivot transversale ledit dispositif (5) de raccordement étant symétrique en miroir par rapport à son plan médian longitudinal perpendiculaire audit pare-brise à essuyer, **caractérisé en ce que** ledit dispositif (5) de raccordement n'est pas symétrique en miroir dans un plan perpendiculaire audit plan médian longitudinal, de sorte que ledit dispositif (5) de raccordement est plus large à une extrémité qu'à son autre extrémité, de manière à permettre uniquement un raccordement à un bras oscillant de telle sorte que tout becquet (15) situé sur ledit balai d'essuie-glace (2) soit convenablement orienté, ledit dispositif (5) de raccordement étant traversé d'un trou transversal débouchant sur ses côtés longitudinaux en formant lesdits trous (10, 11), ledit bras oscillant (6) étant doté d'une extension comprenant ladite broche (12) de pivot et un épaulement (13) en forme de L agissant comme un moyen de fixation pour attacher ledit dispositif (5) de raccordement sur la broche (16) de pivot, ledit épaulement (13) en forme de L faisant saillie dans la direction de ladite broche (12) de pivot et à travers ledit balai d'essuie-glace (2) et à l'extrémité libre de laquelle se trouve une patte (14) faisant face audit pare-brise à essuyer, moyennant quoi le bras (6) d'essuie-glace ne peut être connecté qu'au moyen de fixation situé sur le côté non large du dispositif (5) de raccordement.

2. Dispositif (1) d'essuie-glace de pare-brise selon la revendication 1, dans lequel ledit dispositif (5) de raccordement comprend une première partie (7) reliée aux dites bandes longitudinales (4), ainsi qu'une deuxième partie (9) raccordée à ladite première partie (7) et dotée desdits trous (11, 12) sur ses côtés longitudinaux opposés.

3. Dispositif (1) d'essuie-glace de pare-brise selon la revendication 1 ou 2, dans lequel ladite broche (12) de pivot s'étend latéralement à partir de ladite extrémité libre dudit bras oscillant (6).
